# EUROPÄISCHE PATENTSCHRIFT

(11) **EP 3 607 405 B1**
(45) Veröffentlichungstag und Bekanntmachung des Hinweises auf die Patenterteilung: **17.02.2021**
(21) Anmeldenummer: 18716985.9
(22) Anmeldetag: 04.04.2018
(51) Int. Cl.: G05B 19/042

(54) **VERFAHREN ZUM PARAMETRIEREN EINES FELDGERÄTS SOWIE PARAMETRIERBARES FELDGERÄT**
METHOD FOR PARAMETERIZING A FIELD DEVICE, AND FIELD DEVICE THAT CAN BE PARAMETERIZED
PROCÉDÉ DE PARAMÉTRAGE D'UN APPAREIL DE TERRAIN ET APPAREIL DE TERRAIN PARAMÉTRABLE

(30) Priorität: 05.04.2017 DE 102017205832
(43) Veröffentlichungstag der Anmeldung: 12.02.2020
(73) Patentinhaber: Siemens Aktiengesellschaft, 80333 München (DE)
(72) Erfinder: AUGUSTIN, Martin, 76227 Karlsruhe (DE); BORRMANN, Martin, 76767 Hagenbach (DE); KLOTZBACH, Michael, 76149 Neureut (DE); MILANOVIC, Marco, 76228 Karlsruhe (DE); PRAMANIK, Robin, 76135 Karlsruhe (DE)
(86) Internationale Anmeldenummer: PCT/EP2018/058543
(87) Internationale Veröffentlichungsnummer: WO 2018/185126

(56) Entgegenhaltungen:
- EP-A1- 2 835 700
- WO-A2-2006/053668
- DE-A1-102010 062 908

## Beschreibung

Die Erfindung betrifft ein Verfahren zum Parametrieren eines Feldgeräts, insbesondere eines sicherheitskritischen Feldgeräts, welches beispielsweise als Feldgerät zur Prozessinstrumentierung in einer automatisierungstechnischen Anlage oder in einem Kraftwerk einsetzbar ist, sowie ein entsprechend parametrierbares Feldgerät.

In automatisierungstechnischen Anlagen werden zur Steuerung von Prozessen vielfältige Feldgeräte für die Prozessinstrumentierung eingesetzt. Diese sind häufig mit einer Bedieneinheit versehen, an welcher durch Bedienereingabe beispielsweise eine Parametrierung des Feldgeräts für seinen Betrieb innerhalb eines Automatisierungssystems der Anlage vorgenommen oder das Feldgerät betreffende Prozesswerte vor Ort zur Anzeige gebracht werden können. Messumformer, häufig als Sensoren bezeichnet, dienen zur Erfassung von Prozessvariablen, wie beispielsweise Temperatur, Druck, Durchflussmenge, Füllstand, Dichte oder Gaskonzentration eines Mediums. Durch Stellglieder, auch Aktoren genannt, kann der Prozessablauf in Abhängigkeit von erfassten Prozessvariablen entsprechend einer Strategie beeinflusst werden, die von einer übergeordneten Steuerung, beispielsweise von einer speicherprogrammierbaren Steuerung oder einer Leitstation, vorgegeben wird. Als Beispiele für Stellglieder seien ein Regelventil, eine Heizung oder eine Pumpe genannt.

Als Netzwerk zur Datenkommunikation, durch welches die Feldgeräte mit der übergeordneten Steuerung verbunden sind, kommen häufig Feldbusse zum Einsatz, die beispielsweise nach den Protokollen PROFIBUS, HART (Highway Addressable Remote Transducer) oder FF (Foundation Fieldbus) arbeiten. Die Konfiguration, Inbetriebnahme und die Überwachung der Automatisierungsanwendung, die mit dem Automatisierungssystem realisiert wird, wird mittels eines Leitsystems vorgenommen. Als Beispiele seien SCADA (Supervisory Control and Data Acquisition)-System, WinCC (Windows Control Center) und PLS (Prozessleitsystem), zum Beispiel Simatic PCS 7, genannt. Insbesondere die Projektierung, Parametrierung, Inbetriebnahme, Diagnose und Wartung von Feldgeräten kann beispielsweise mit dem Werkzeug Simatic PDM (Prozess Device Manager) erfolgen.

Für die Parametrierung von Feldgeräten, insbesondere von sicherheitskritischen Feldgeräten, die zur Messung und Überwachung sicherheitskritischer Anlagen, Systeme oder Prozesse eingesetzt werden, gelten besondere Sicherheitsanforderungen. In einer Anlage mit Anforderungen nach IEC 61508, das heißt Anforderungen der funktionalen Sicherheit elektronischer Systeme, die eine Sicherheitsfunktion ausführen, besteht das Problem, dass Feldgeräte für die Inbetriebnahme und Parametrierung meist nur über unsichere Schnittstellen, zum Beispiel HART, PROFIBUS, FF oder PROFINET, verfügen. Für die Kommunikation zwischen Feldgerät und Parametriereinheit, die in der vorliegenden Anmeldung als Engineering-System bezeichnet wird, stehen dann nur unsichere Kommunikationswege zur Verfügung, auf welchen die übertragenen Daten eventuell verfälscht werden können. Eine sichere entfernte Parametrierung, welche auch die Schritte Validierung, d. h. Überprüfung der Parameter auf ihre Gültigkeit, und gegebenenfalls Fehlerquittierung umfasst, ist in einer derartigen Umgebung ohne zusätzliche technischen Maßnahmen nicht gemäß den Anforderungen der funktionalen Sicherheit beispielsweise der Anforderungsstufe SIL 3 (Safety Integrity Level 3) umsetzbar, weil schon die unsichere Kommunikationsumgebung zur Verfälschung der Parameter führen könnte. Problematisch können auch konkurrierende Zugriffe auf dasselbe Feldgerät sein, die zum Beispiel bei der Inbetriebnahme einer Anlage vorkommen können, wenn von mehreren Anwendern gleichzeitig eine Vielzahl von Feldgeräten in Betrieb genommen werden sollen.

Aus der DE 10 2010 062 908 B4 ist bekannt, dass die Validierung einer Geräteparametrierung prinzipiell auch vor Ort mit Hilfe der an einem Feldgerät vorhandenen Anzeige durchgeführt werden kann. Die eingegebenen Parameter werden dazu auf der Anzeige des Feldgeräts angezeigt. Ein Anwender kann anhand einer ihm vorliegenden Parameterliste, welche den Parametern entsprechende Parameter-IDs (Parameter-Identifikationscodes) und Parameterwerte enthält, die einzelnen Parameter auf ihre Richtigkeit überprüfen. Stimmen die angezeigten Parameter mit den in der Liste angegebenen überein, kann der Anwender beispielsweise mit seiner Unterschrift auf einem Prüfprotokoll bestätigen, dass die von ihm validierten Parameterwerte mit den vorgegebenen übereinstimmen und dass zudem das richtige sicherheitskritische Feldgerät überprüft wurde. Diese Vorgehensweise hat jedoch den Nachteil, dass Parameterlisten komplexer Feldgeräte üblicherweise eine Vielzahl von Geräteparametern umfassen, so dass eine visuelle Prüfung der einzelnen Parameter mit einem hohen Aufwand und einer gewissen Fehleranfälligkeit verbunden ist. Zudem sind sicherheitskritische Feldgeräte für eine Bedienung vor Ort häufig nur schwer zugänglich.

Zur Vermeidung dieser Nachteile ist in der oben erwähnten Patentschrift ein Verfahren beschrieben, bei welchem zur Validierung der Parameter eines Feldgeräts zum einen durch das Feldgerät auf der Basis der hinterlegten Parameter und einer Geräte-ID (Geräte-Identifikationscode) und zum anderen durch eine eventuell entfernt angeordnete Engineering-Station auf der Basis der ihr zur Verfügung stehenden Parameterliste und der Geräte-ID jeweils ein Prüfkennzeichen mittels einer vorgegebenen Berechnungsfunktion berechnet wird. Die dabei erhaltenen Prüfkennzeichen werden miteinander verglichen. Der Vergleich kann mittels der Engineering-Station oder des Feldgeräts durchgeführt werden.

Nachteilig dabei ist jedoch, dass selbst bei Übereinstimmung der im Engineering-System und im Feldgerät verwendeten Berechnungsfunktion sich voneinander abweichende Prüfkennzeichen ergeben können, obwohl zwischen der Parametrierung des Feldgeräts und der im Engineering-System vorliegenden Parameterliste ausreichende Übereinstimmung gegeben ist.

Aus der EP 2 835 700 A1 ist ein Verfahren zur Parametrierung eines Feldgerätes bekannt, wobei von einer Parametriereinheit ein Parameterwert an das Feldgerät übermittelt wird und von diesem mindestens eine Rückmelde-Zeichenkette aus dem empfangenen Parameterwert erzeugt, an die Parametriereinheit übermittelt und dort angezeigt wird. Die Rückmelde-Zeichenkette wird dadurch erzeugt, dass in die Zeichenkette des empfangenen Parameterwerts an mindestens einer vorgebbaren oder allein durch das Feldgerät festgelegten Position mindestens ein, insbesondere für den Benutzer verständliches, Zeichen eingefügt wird.

Aus der WO 2006/053668 A2 ist es bekannt, zur Parametrierung vorgesehene Parameterwerte, welche über eine Anwenderoberfläche einer elektronischen Bedieneinrichtung ausgewählt oder eingegeben und anschließend an ein elektronisches Gerät übertragen werden, in wenigstens einem von der Bedieneinrichtung zugreifbaren Speicher zu halten und zur Verifikation der sicheren Parametrierung aus dem Speicher wenigstens einmal rückzulesen.

Der Erfindung liegt daher die Aufgabe zugrunde, ein Verfahren zum Parametrieren eines Feldgeräts sowie ein zur Durchführung des Verfahrens geeignetes Feldgerät zu schaffen, welche die oben genannten Nachteile vermeiden und welche zudem eine funktional sichere entfernte Parametrierung des Feldgeräts selbst über ein unsicheres Netzwerk hinweg ermöglichen.

Zur Lösung dieser Aufgabe weist das neue Verfahren zum Parametrieren eines Feldgeräts die in Anspruch 1 angegebenen Merkmale auf. In Anspruch 6 ist ein Feldgerät beschrieben, welches zur Durchführung des Verfahrens geeignet ist. Weiterbildungen der Erfindung sind in den abhängigen Ansprüchen angegeben.

In den Ansprüchen sind zur deutlichen Darstellung der erfindungsgemäßen Parametrierung eine erste, zweite, dritte und vierte logische Schnittstelle angeführt. Es ist jedoch darauf hinzuweisen, dass es sich bei der ersten Schnittstelle und der zweiten Schnittstelle um dieselbe physikalische und logische Schnittstelle handeln kann. Ebenso können die dritte und die vierte Schnittstelle dieselben sein. Wichtig ist jedoch, dass zum Rückschreiben des Parameters vom Feldgerät zum Engineering-System eine logische Schnittstelle genutzt wird, die zur Schnittstelle, die zum Parametrieren des Feldgeräts genutzt wird, datendiversitär ist. Datendiversität bedeutet in diesem Zusammenhang, dass zumindest unterschiedliche Datenformate bei der Übertragung genutzt werden. Beispielsweise kann der zumindest eine Parameter über die erste logische Schnittstelle in der im Übertragungsprotokoll ursprünglich definierten Form an das Feldgerät übertragen werden, während die Rückübertragung des Parameters zum Engineering-System beispielsweise in einer davon abweichenden String-Darstellung erfolgt. Durch die verwendete Datendiversität wird eine Anforderung der funktionalen Sicherheit bei der Übertragung erfüllt. Für die beiden Übertragungsrichtungen des ersten Prüfkennzeichens zwischen Feldgerät und Engineering-System gilt entsprechendes.

Die Berechnung eines ersten Prüfkennzeichens, welche beispielsweise nach einem der aus der bereits eingangs genannten DE 10 2010 062 908 B4 bekannten Verfahren durchgeführt werden kann, erfolgt lediglich mit den Mitteln des Feldgeräts. Das hat den Vorteil, dass im Engineering-System, also außerhalb des Feldgeräts, keine Algorithmen zur Berechnung des Prüfkennzeichens implementiert werden müssen und somit das Risiko vermieden wird, dass eine Implementierung des Verfahrens auf Engineering-Systemen unterschiedlicher Hersteller zu abweichenden Prüfkennzeichen führt. In vorteilhafter Weise wird somit ein Verfahren zum Parametrieren eines Feldgeräts erhalten, welches unabhängig vom jeweiligen Hersteller des verwendeten Engineering-Systems eine zuverlässig funktionierende Validierung der Parameter ermöglicht. Wird zur Inbetriebnahme des Feldgeräts eine elektronische Gerätebeschreibungsdatei, die in das Engineering-System geladen wird, verwendet, hat dies weiterhin den Vorteil, dass diese im Engineering-System keine besonderen Berechnungen von Prüfkennzeichen oder keine dafür gedachten Methoden implementieren muss. Hieraus ergibt sich eine vorteilhaft hohe Interoperabilität der Gerätebeschreibungsdatei.

Durch die überwiegende Implementierung des Verfahrens im Feldgerät wird die Einhaltung des Verfahrensablaufs im Wesentlichen durch das Feldgerät erzwungen. Bei der Erstellung der Gerätebeschreibungsdatei kann man sich auf die Gestaltung einer Nutzerführung auf dem Engineering-System konzentrieren, in welcher ein Anwender dazu aufgefordert wird, an einer Bedieneinheit des Engineering-Systems eine visuelle Prüfung der Parametrierung und der Geräte-ID vorzunehmen und nach erfolgreicher Überprüfung ein durch das Feldgerät berechnetes und auf der Bedieneinheit des Engineering-Systems dargestelltes Prüfkennzeichen zur Quittierung einzugeben. Darüber hinaus sind im Engineering-System vorteilhaft keine speziellen Maßnahmen erforderlich.

Da die Geräte-ID in die Berechnung des Prüfkennzeichens einbezogen ist, erlaubt das Verfahren eine Parametrierung eines Feldgeräts selbst unter Beibehaltung der Installation des Feldgeräts in der Anlage, da über die Geräte-ID sichergestellt ist, dass es sich um eine Validierung der Parameter des richtigen Feldgeräts handelt und da somit Probleme vermieden werden, die ansonsten beispielsweise durch eine Mehrfachbelegung mit Feldgeräten an Feldbussträngen potentiell auftreten könnten. Das Verfahren ist vorteilhaft unabhängig von der bestehenden Automatisierungsstruktur anwendbar und erlaubt beispielsweise im Falle einer hierarchischen Struktur eine Einbindung des Engineering-Systems in beliebiger Ebene. Das Verfahren erlaubt zudem vorteilhaft eine Parametrierung eines Feldgeräts während des normalen Betriebsablaufs der jeweiligen Anlage, da keinerlei Signale erzeugt werden, die andere Teile der Anlage stören oder in ihrer Funktionssicherheit beeinflussen könnten. Bei temporär auftretenden Sicherheitsfehlern, beispielsweise ausgelöst durch EMV-Störungen, ist die Möglichkeit einer Parametrierung eines Feldgeräts mittels eines entfernt angeordneten Engineering-Systems und die Möglichkeit einer Aktivierung des Sicherheitsbetriebs des Feldgeräts aus der Ferne ein großer Vorteil.

Damit die Menge der bei der Validierung durch den Anwender auf einer Anzeige des Engineering-Systems visuell zu überprüfenden Parameter überschaubar bleibt, kann zwischen Anwenderparametern, hier als SCUP (Safety Critical User Parameters) bezeichnet, und Installationsparametern, SCIP (Safety Critical Installation Parameters) genannt, unterschieden werden. Vorzugsweise werden lediglich die SCUP zur Überprüfung ihrer Gültigkeit angeboten.

Besonders bei der Inbetriebnahme größerer Anlagen ist von einem gewissen Zeitaufwand mit Pausen zwischen den einzelnen Schritten auszugehen. Zum Beispiel müssen Tanks und Verrohrung mit Pumpen etc. aufgebaut werden. Daher besteht oft ein zeitlicher Versatz zwischen Einbau eines Feldgeräts, Parametrierung, Validierung und Funktionsprüfung des Feldgeräts. Damit ein Anwender stets weiß, an welchem Punkt die Inbetriebnahme fortzusetzen ist, ist es von besonderem Vorteil, dass beispielsweise der Zustand einer abgeschlossenen Validierung der SCUP in einem Speicher des Feldgeräts hinterlegt wird, damit die Inbetriebnahme an diesem Punkt fortgesetzt werden kann. Der Fortschritt der Inbetriebnahme, selbst über An/Aus-Zyklen hinweg, ist somit vorteilhaft im Gerät hinterlegt.

Das Feldgerät ist vorteilhaft mit einem Schreibschutz mit einem durch den Anwender einstellbaren PIN-Code (Personal Identification Number) versehen. Bei sicherheitskritischen Feldgeräten ist dies eine allgemein verwendete Maßnahme. Damit die im Feldgerät hinterlegten SCUP nicht fälschlicherweise geändert werden können, ist ein aktivierter Schreibschutz Voraussetzung für den Übergang in den Zustand der abgeschlossenen Validierung und für den dortigen Verbleib.

Bei Abschluss der Validierung wird durch das Feldgerät entsprechend seiner Parametrierung mit den SCUP und den SCIP ein zweites Prüfkennzeichen berechnet und dem Anwender auf einer Anzeige des Engineering-Systems zur Verfügung gestellt, damit dieser das zweite Prüfkennzeichen dokumentieren und zur Kontrolle auf zwischenzeitliche Veränderungen überprüfen kann. Gab es bei der Inbetriebnahme oder im späteren Betrieb des Feldgeräts Änderungen der Parametrierung, ändert sich auch das durch das Feldgerät berechnete zweite Prüfkennzeichen. Der Anwender kann somit die Gültigkeit der Parametrierung auch über An/Aus-Zyklen hinweg kontrollieren. Sollte das aktuell vom Feldgerät berechnete zweite Prüfkennzeichen nicht mehr mit dem dokumentierten übereinstimmen, ist der Anwender angehalten, die Parametrierung zu überprüfen bzw. den Parametrierungsvorgang zu wiederholen. Vorteilhaft kann damit die Integrität der Parametrierung gewährleistet werden und im Falle einer unzulässigen Änderung der Parametrierung können geeignete Maßnahmen ergriffen werden.

Nach Abschluss der Validierung der SCUP kann sich vorteilhaft eine Funktionsprüfung bei der Inbetriebnahme zur Feststellung der Gültigkeit der Installationsparameter, SCIP genannt, anschließen. Bestätigt der Anwender den erfolgreichen Verlauf der Funktionsprüfung, ist die Validierung der SCIP erfolgt und das Feldgerät wechselt in den Sicherheitsbetrieb. Sollte bei der Funktionsprüfung ein Fehler festgestellt werden, ist der Anwender dazu angehalten, die Prozedur abzubrechen. Das Feldgerät wechselt daraufhin in den Nicht-Sicherheitsbetrieb. Die Durchführung der Funktionsprüfung ist nicht zwingend und kann mit entsprechender Bedieneingabe des Anwenders auch übersprungen werden. Dies wird jedoch nicht empfohlen, kann aber für bestimmte Anwendungsfälle eine akzeptable Lösung darstellen.

Bei einer besonders vorteilhaften Ausgestaltung der Erfindung weist das Feldgerät einen Zustandsautomaten auf, der zumindest zwischen den Zuständen Nicht-Sicherheitsbetrieb, Validierung, Sicherheitsbetrieb und Sicherheitsfehler unterscheidet. In vorteilhafter Weise treibt und überwacht der Zustandsautomat den Ablauf bei der Inbetriebnahme, das heißt er sorgt für die Einhaltung eines vorgegebenen Verfahrensablaufs. Nur bei gültigen Bedienereingaben oder Datenübertragungen zwischen Engineering-System und Feldgerät finden die im Zustandsautomat festgelegten Zustandsübergänge statt. Ungültige Eingaben oder Datenübergaben werden abgelehnt oder ignoriert und das Feldgerät wechselt zum Beispiel nicht in den Sicherheitsbetrieb.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Blockschaltbild eines Automatisierungssystems,
- Figur 2: ein Blockschaltbild eines sicherheitskritischen Feldgeräts,
- Figur 3: einen Speicher des Feldgeräts gemäß Figur 2 und
- Figur 4: ein Zustandsdiagramm eines Automaten im Feldgerät.

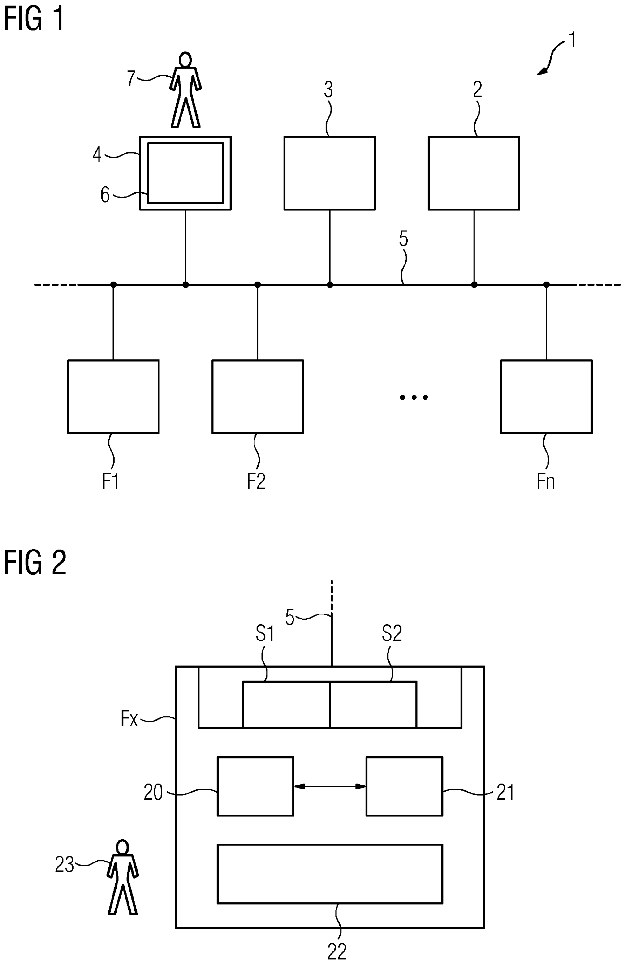

In Figur 1 ist ein Automatisierungssystem 1 dargestellt, welches in einer nicht weiter dargestellten automatisierungstechnischen Anlage zur Steuerung eines Prozesses dient. In dem Automatisierungssystem 1 sind ein Leitsystem 2, hier ein SIMATIC PCS 7, ein Inbetriebsetzungswerkzeug 3, hier ein SIMATIC PDM, eine Engineering-Station 4 und Feldgeräte F1, F2, ... Fn durch ein Netzwerk 5 zur Datenkommunikation miteinander verbunden. Bei dem Netzwerk 5 kann es sich um ein beliebiges handeln, zum Beispiel ein industrielles Netzwerk mit PROFIBUS-, PROFINET-, HART- oder FF-Protokoll. Aber auch nicht industrielle Netzwerke, z. B. WAN (Wide Area Network), Internet oder beliebige drahtlose Netzwerke sind geeignet. An das Netzwerk 5 müssen - im Unterschied zu Verbindungen für den Austausch von Prozesswerten für einen funktional sicheren Steuer-/Regelbetrieb - keine Anforderungen der funktionalen Sicherheit gestellt werden. Das Inbetriebsetzungswerkzeug 3 und die Engineering-Station 4 werden zur Parametrierung der sicherheitskritischen Feldgeräte F1, F2, ... Fn eingesetzt. Die Engineering-Station 4 ist mit einer Bedieneinheit 6 versehen, mittels welcher ein Anwender 7 verschiedene, bei der Durchführung des Verfahrens zum Parametrieren eines Feldgeräts erforderliche Bedieneingaben vornehmen kann. Die Bedieneinheit 6 dient gleichzeitig als Anzeige zur Ausgabe von Daten, zu deren visueller Prüfung der Anwender bei der Durchführung des Verfahrens angehalten wird.

Selbstverständlich können das Leitsystem 2, das Inbetriebsetzungswerkzeugs 3 und die Engineering-Station 4 durch eine beliebige Anzahl von Recheneinheiten realisiert sein, z. B. abweichend vom dargestellten Ausführungsbeispiel durch lediglich eine Recheneinheit, auf welcher dann die Funktionen der drei genannten Komponenten zusammengefasst sind.

Die Feldgeräte F1, F2, ... Fn werden jeweils mit einem Sicherheitshandbuch ausgeliefert, welches den genauen Ablauf bei der Durchführung des Verfahrens beschreibt. Zudem werden jeweils zu den Feldgeräten F1, F2, ... Fn passende Gerätebeschreibungsdateien geliefert, welche den Ablauf des Verfahrens im Engineering-System 4 vorgeben und Schnittstellen bedienen, damit die notwendigen Daten für die im Sicherheitshandbuch beschriebenen Dialoge zur Verfügung gestellt werden. Selbstverständlich kann das Verfahren auf Seite der Engineering-Station 4 alternativ zu einer in EDDL (Electronic Device Description Language) verfassten Gerätebeschreibungsdatei durch Mittel/Methoden wie DTM (Device Type Manager) oder FDI (Field Device Integration) unterstützt werden.

Figur 2 zeigt den prinzipiellen Feldgeräteaufbau am Beispiel eines Feldgeräts Fx, bei welchem es sich um ein beliebiges der Feldgeräte F1, F2, ... Fn handeln kann und welches den Anforderungen der funktionalen Sicherheit genügt. Das Feldgerät Fx ist mit zwei logischen Schnittstellen S1 und S2 versehen, die beide zur Kommunikation über das Automatisierungsnetzwerk 5 ausgebildet sind. Die Schnittstelle S2 ist datendiversitär zur Schnittstelle S1, das heißt im dargestellten Ausführungsbeispiel, dass für die beiden Schnittstellen S1 und S2 getrennte Adressräume und diversitäre Datenformate zur Datenübertragung genutzt werden. Weiterhin besitzt das Feldgerät Fx eine Recheneinheit 20, einen Speicher 21 und eine Bedieneinheit 22, die mit einer Tastatur und einer Anzeige zur Vor-Ort-Bedienung durch einen Anwender 23 versehen ist. Bei reiner Remote-Bedienung kann die Bedieneinheit 22 entfallen.

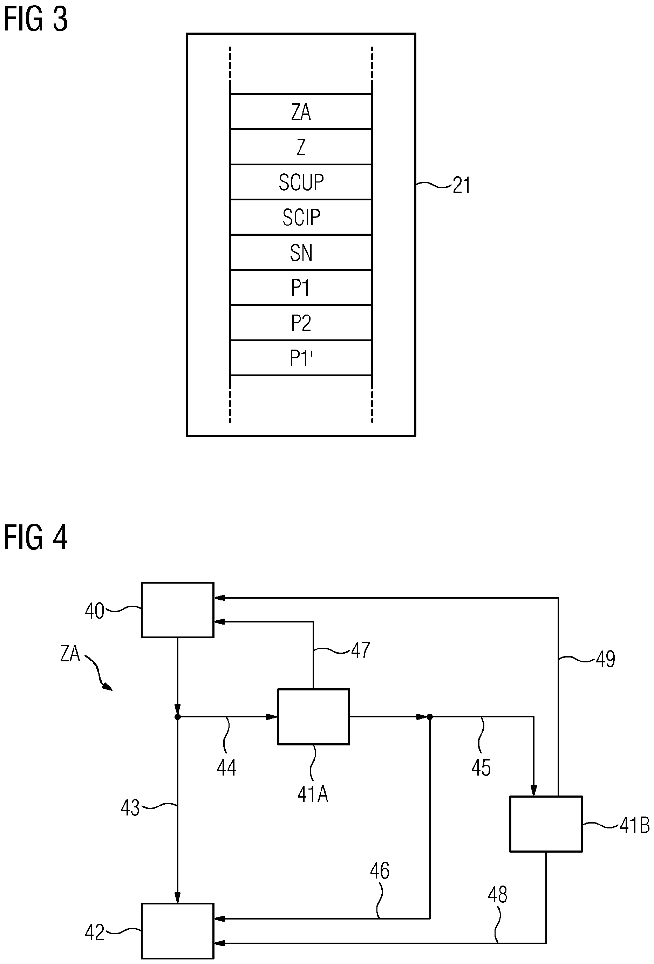

Figur 3 zeigt einen Auszug aus dem Inhalt des Speichers 21 des Feldgeräts Fx (Figur 2). Als Bestandteil der Firmware ist ein Programmabschnitt zur Realisierung eines Zustandsautomaten ZA mit einer Codierung der jeweiligen Zustände Z hinterlegt. Weitere Speicherbereiche sind zur Abspeicherung der Anwenderparameter SCUP, die mittels einer Bedieneinheit (22) in das Feldgerät (Fx) eingegeben oder über eine erste logische Schnittstelle (S1) an das Feldgerät (Fx) übertragen werden können und zu deren Validierung eine visuelle Prüfung des Anwenders durchgeführt wird, und der Installationsparameter SCIP, die mittels eines Funktionstests überprüft werden können, vorgesehen. Zur eindeutigen Identifikation des Feldgeräts Fx (Figur 2) dient eine ebenfalls im Speicher 21 hinterlegte Seriennummer SN. Zudem werden im Speicher 21 Werte eines ersten Prüfkennzeichens P1, welches in der vorliegenden Anmeldung auch als Validation Key bezeichnet wird, und eines zweiten Prüfkennzeichens P2, im Folgenden auch Fingerprint genannt, hinterlegt. In den Fingerprint können auch weitere Parameter einfließen, die nicht sicherheitsrelevant sind. Er kann somit ebenso als eine eindeutige Charakterisierung einer Konfiguration dienen. Die Berechnung der beiden Prüfkennzeichen P1 und P2 wird feldgeräteintern mittels der Recheneinheit 20 (Figur 2) auf Basis der Anwenderparameter SCUP und der Seriennummer SN bzw. auf Basis der Anwenderparameter SCUP, der Installationsparameter SCIP und der Seriennummer SN durchgeführt. Dazu wird jeweils eine CRC (Cyclic Redundancy Check)-Funktion verwendet. Wie bereits in der eingangs erwähnten DE 10 2010 062 908 B4 beschrieben, können alternativ dazu selbstverständlich auch andere bekannte Verfahren zur Berechnung von Prüfkennzeichen eingesetzt werden. Eine andere Möglichkeit wäre ein Hash, eine einfache Checksumme, ein Message Integrity Code (MIC) oder ein Message Authentication Code (MAC). Diese Auflistung ist nicht vollständig. Wichtig bei der Auswahl des Verfahrens ist eine geringe Wahrscheinlichkeit, dass keine andere Konfiguration zum gleichen Ergebnis bei der Berechnung des Prüfkennzeichens führt. Zusätzlich kann im Speicher 21 ein bei der Durchführung des Verfahrens durch das Feldgerät empfangenes erstes Prüfkennzeichen P1' hinterlegt werden.

Figur 4 zeigt in vereinfachter Darstellung einen Zustandsautomaten ZA, der im Feldgerät Fx (Figur 2) implementiert ist. Der Zustandsautomat ZA sorgt für die Einhaltung eines vorgegebenen Verfahrensablaufs bei der Inbetriebnahme des Feldgeräts. Der dargestellte Ausschnitt des Zustandsautomaten ZA umfasst die Zustände Nichtsicherheitsbetrieb 40, Validierung 41A der Anwenderparameter SCUP, Validierung 41B der Installationsparameter SCIP und Sicherheitsbetrieb 42. Vor Durchführung eines Zustandswechsels wird die korrekte Zuordnung der Anforderung des Zustandswechsels zum jeweiligen Feldgerät geprüft. Dazu verwendet der Zustandsautomat ZA die Seriennummer SN (Figur 3) des Feldgeräts. Passt die Seriennummer nicht, wird die Anforderung verworfen. Durch Verwendung des Zustandsautomaten ZA, intern berechneter Prüfkennzeichen P1 und/oder P2 sowie der individuellen Seriennummer als Geräte-ID werden Abweichungen vom vorgegebenen Verlauf, Verfälschungen der Parameter bzw. eine fehlerhafte Gerätezuordnung ausgeschlossen. Zudem kann im jeweiligen Feldgerät eine Plausibilisierung der gewählten Parametrierung durchgeführt werden. Parameter, die dem Sicherheitsbetrieb widersprechen, blockieren einen Übergang von dem Nichtsicherheitsbetrieb 40 in die Validierung 41A, 41B. Einem Anwender können dem Sicherheitsbetrieb widersprechende Parameter auf der Anzeige der Bedieneinheit 22 (Figur 2) oder der Bedieneinheit 6 (Figur 1) angezeigt werden, damit er durch geeignete Änderung der Parameter Abhilfe schaffen kann.

Vor Eintritt in die Validierung liegt bereits eine vollständige Parametrierung des Feldgeräts vor, die beispielsweise mittels SIMATIC PDM über die Schnittstelle S1 (Figur 2) durchgeführt wurde. Für jedes Feldgerät existiert ein eindeutiges Identifikationsmerkmal, eine Geräte-ID, das im Feldgerät gespeichert ist und bei jedem Eingabedialog zur Kontrolle durch den Anwender auf der Anzeige der Bedieneinheit 6 (Figur 1) des Engineering-Systems ausgegeben wird. Die Anzeige kann zum Beispiel wie folgt aussehen:

| | |
|---|---|
| Tag: | KV1474-F30 |
| Product name: | SITRANS P 410 |
| Serial number: | 12345678-12345 |

Dazu ist die Seriennummer beispielsweise über die Schnittstelle S1 (Figur 2) für das Engineering-System auslesbar. Zudem ist dieses Identifikationsmerkmal auch auf dem Gehäuse des Geräts angebracht. Der Anwender wird angehalten, das Identifikationsmerkmal zu dokumentieren und bei jedem Eingabedialog zu überprüfen, dass das korrekte Feldgerät bei dem Dialog angesprochen wird.

Es ist ein Schreibschutz für die Geräteparameter vorhanden, so dass eine Veränderung der Parameter durch nichtautorisierte Anwender oder aufgrund einer Fehladressierung des Geräts ausgeschlossen werden kann. Ein Übergang vom Sicherheitsbetrieb 40 in die Validierung 41A, 41B ist nur bei für die Parameter SCUP und SCIP aktiviertem Schreibschutz möglich. Für den Vorgang der Validierung wird der Schreibschutz für den Anwender teilweise deaktiviert, so dass lediglich die für die Vornahme der Zustandswechsel des Feldgeräts gemäß Figur 4 erforderlichen Eingaben des Anwenders vorgenommen werden können.

Ausgehend von dem Zustand 40, dem Nichtsicherheitsbetrieb, kann auf Wunsch des Anwenders entsprechend einem Pfad 43 unmittelbar in den Zustand 42, den Sicherheitsbetrieb, übergegangen werden. Der Anwender ist verantwortlich für die funktionale Sicherheit seiner Anlage und hat es somit in der Verantwortung, ob eine Validierung durchgeführt werden soll oder nicht. Dieser Pfad 43 sollte nur begangen werden, wenn gewährleistet werden kann, dass bereits mit Auslieferung des Feldgeräts eine korrekte Parametrierung vorliegt. Üblicherweise ist er daher nicht zu empfehlen und ist nur mit Vor-Ort-Bedienung am Feldgerät möglich.

Empfohlen wird dagegen ein Pfad 44 zum Übergang in den Zustand 41A, in welchem zunächst eine Validierung der Anwenderparameter SCUP durchgeführt wird.

Falls im Feldgerätespeicher hinterlegt ist, dass die Anwenderparameter SCUP bereits validiert sind, ist deren erneute Validierung nicht mehr erforderlich und kann übersprungen werden. Dazu wird der Zustand einer erfolgreich durchgeführten Validierung der Anwenderparameter SCUP im Feldgerät abgespeichert, so dass ein Neueinstieg bei einer Validierungsunterbrechung, beispielsweise über einen An/Aus-Zyklus hinweg, hinter dem zuletzt abgeschlossenen Schritt der Validierung der Anwenderparameter SCUP ermöglicht wird.

Falls zuvor noch keine Validierung der Anwenderparameter SCUP stattgefunden hatte, wird zur Durchführung der Validierung der Anwenderparameter SCUP durch die Recheneinheit 20 (Figur 2) auf der Basis der über die Schnittstelle S1 (Figur 2) erhaltenen und im Speicher 21 (Figur 3) hinterlegten Anwenderparameter SCUP und der Geräte-ID ein erstes Prüfkennzeichen P1 (Figur 3), der so genannte Validation Key, berechnet und im Speicher 21 (Figur 3) abgespeichert. Über eine zweite logische Schnittstelle, die mit der ersten logischen Schnittstelle S1 im beschriebenen Beispiel identisch ist, wird der Validation Key P1 zur Engineering-Station 4 (Figur 1) als Zeichen-String übertragen. Zudem werden die Anwenderparameter SCUP über eine dritte logische Schnittstelle, die in der vorliegenden Anmeldung identisch mit der logischen Schnittstelle S2 und datendiversitär zur ersten logischen Schnittstelle S1 ausgeführt ist, in Form eines einzelnen oder mehrerer Strings zum Engineering-System 4 (Figur 1) übertragen. Die genannte Übertragung mit String-Format ist lediglich ein Beispiel für Diversität der Datenübertragung. Es wäre aber auch eine Übertragung als ganze Zahl statt Fließkommazahl denkbar oder eine bit-inverse Darstellung der jeweils übertragenen Daten.

Datendiversität zwischen der ersten logischen Schnittstelle S1 und der dritten logischen Schnittstelle S2 wird dadurch erreicht, dass bei Zugriffen über die dritte logische Schnittstelle S2 ein zusätzlicher Adressraum genutzt wird und dass die Datendarstellung bei einer Übertragung der Parameter über die erste logische Schnittstelle S1 in der im Übertragungsprotokoll, beispielsweise der Parametrierung mittels SIMATIC PDM, ursprünglich definierten Form erfolgt, während bei der Rückübertragung über die dritte logische Schnittstelle S2 eine String-Darstellung genutzt wird. Da in die Berechnung des Validation Key P1 unter anderem die Geräte-ID eingeht, ist der Validation Key selbst dann für jedes Feldgerät eindeutig, wenn die Parametrierung verschiedener Feldgeräte identisch ist. Dies ist zum Beispiel vorteilhaft bei einer redundanten 1002 (1 out of 2)-Architektur, in welcher zwei Feldgeräte derselben Art eingesetzt werden.

Auf der Anzeige der Bedieneinheit 6 des Engineering-Systems 4 (Figur 1) werden zusätzlich zur bereits oben beschriebenen Ausgabe der Geräte-ID die durch das Feldgerät übermittelten Anwenderparameter SCUP sowie der Validation Key ausgegeben und in einem Beispiel mit lediglich einem Anwenderparameter "Measurement Range" wie folgt dargestellt:

| | |
|---|---|
| Measurement Range: | 100 mbar |
| Validation Key: | 56789. |

Zur Validierung führt nun der Anwender an der Bedieneinheit 6 des Engineering-Systems 4 (Figur 1) eine Überprüfung der angezeigten Anwenderparameter SCUP und der Geräte-ID auf ihre Korrektheit durch und gibt zur Bestätigung ihrer Richtigkeit den angezeigten Wert des Validation Key in ein auf der Anzeige der Bedieneinheit 6 angebotenes Eingabefeld ein. Nach korrekter Eingabe des Validation Key kann der Anwender durch Drücken eines Buttons "Starten Funktionsprüfung" (englisch: Start Function Test) oder eines Buttons "Überspringe Funktionsprüfung" (englisch: Skip Function Test) die Richtigkeit der angezeigten Werte quittieren und gleichzeitig auswählen, ob von dem Zustand 41A über einen Pfad 45 in den Zustand 41B, in welchem der Funktionstest durchgeführt wird, oder über einen Pfad 46 direkt in den Zustand 42, nämlich den Sicherheitsbetrieb, übergegangen werden soll. Selbstverständlich wird neben den beiden oben beschriebenen Buttons ein Button "Abbruch" (englisch: Cancel) angeboten. Sollte die Parametrierung Fehler aufweisen, kann der Anwender an dieser Stelle die Validierung abbrechen. Das Feldgerät wechselt dann aus dem Zustand 41A entsprechend einem Pfad 47 in den Zustand 40 des Nichtsicherheitsbetriebs.

Bei erfolgter Quittierung der Richtigkeit der angezeigten Werte wird der eingegebene Validation Key über eine vierte logische Schnittstelle, die datendiversitär zur zweiten logischen Schnittstelle S1 ausgeführt ist, an das Feldgerät übertragen und dort als empfangenes erstes Prüfkennzeichen P1' im Speicher 21 hinterlegt. Datendiversität wird im beschriebenen Ausführungsbeispiel dadurch erreicht, dass die Rückübertragung des Validation Key zum Feldgerät als reiner Zahlenwert erfolgt, während bei der Übertragung des im Feldgerät berechneten Validation Key zur Engineering-Station ein String-Format verwendet wird. Selbstverständlich könnte die erforderliche Datendiversität alternativ mit vertauschten Datenformaten für die beiden Übertragungsrichtungen erreicht werden. Als vierte Schnittstelle kann beispielsweise dieselbe Schnittstelle S2 verwendet werden, die schon zur Realisierung der dritten logischen Schnittstelle genutzt wird.

Ein Übergang in den Zustand 41B bzw. 42 findet nur in dem Fall statt, dass im Feldgerät eine Übereinstimmung des empfangenen Validation Key P1' mit dem zuvor durch das Feldgerät berechneten Validation Key P1 festgestellt wird. Zudem wird der Validation Key P1' durch das Feldgerät abgelehnt, falls die dritte logische Schnittstelle S2 nicht zur Rückübertragung der Anwenderparameter SCUP vom Feldgerät zum Engineering-System genutzt wurde.

Ein Zustandswechsel führt zu einer Änderung des Werts des Zustands-Codes Z (Figur 3), der im Speicher 21 hinterlegt ist. Damit wird der Zustand der erfolgten Quittierung, das heißt der erreichte Fortschritt bei der Parametrierung des Feldgeräts, auch über An/Aus-Zyklen hinweg im Feldgerät gespeichert. Durch das Feldgerät wird ein zweites Prüfkennzeichen P2 (Figur 3), der so genannte Fingerprint, berechnet und im Speicher 21 hinterlegt. Die Berechnung des Fingerprints P2 erfolgt auf der Basis der vollständigen Parametrierung, das heißt der Anwenderparameter SCUP und der Installationsparameter SCIP, sowie der Geräte-ID des Feldgeräts. Dieser Fingerprint P2 kann zum einen auf der Anzeige der Bedieneinheit 22 des Feldgeräts Fx (Figur 2) durch einen Anwender 23 abgefragt werden und wird zudem beispielsweise über die logische Schnittstelle S1 zum Engineering-System 4 (Figur 1) übertragen, so dass der Wert des Fingerprints P2 auf der entfernt angeordneten Anzeige der Bedieneinheit 6 (Figur 1) ausgegeben wird. Die Anzeige des Fingerprints, beispielsweise in einer Zeile
Fingerprint: 34512
erfolgt wiederum gemeinsam mit der bereits oben beschriebenen Anzeige der Geräte-ID, so dass eine eindeutige Zuordnung zum jeweiligen Feldgerät ermöglicht wird. Der Anwender kann den jeweiligen Wert des Fingerprints P2 für das Feldgerät in seinen Unterlagen dokumentieren, so dass er anhand des Fingerprints P2 die Gültigkeit der Parametrierung auch über An/Aus-Zyklen hinweg erkennen kann. Dies gewährleistet die Integrität der Parametrierung auch über Standzeiten hinweg und trotz eventuell konkurrierender Zugriffe auf die Parametrierung des Feldgeräts. Sollte ein aktuell vom Feldgerät berechneter Wert des Fingerprints P2 nicht mehr mit dem dokumentierten Wert übereinstimmen, wird eine Veränderung der Parametrierung des Feldgeräts erkannt und der Anwender kann die Parametrierung überprüfen und gegebenenfalls eine Neuparametrierung und Validierung vornehmen.

Ein Überspringen des Funktionstests entsprechend dem Pfad 46 in Figur 4 ist zwar möglich, wird jedoch nicht empfohlen. Zur Gewährleistung der funktionalen Sicherheit soll der Anwender den Pfad 45 zum Fortschritt der Parametervalidierung und zur Durchführung des Funktionstests im Zustand 41B des Feldgeräts wählen. Nach erfolgreichem Verlauf des Funktionstests sind auch die Installationsparameter SCIP auf ihre Richtigkeit überprüft und es kann entsprechend einem Pfad 48 in den Zustand 42 des Sicherheitsbetriebs übergegangen werden. Zur Aktivierung des Sicherheitsbetriebs betätigt der Anwender einen Button "Funktionstest erfolgreich und Fingerprint gültig" (englisch: Function Test Passed and Fingerprint Valid). Sollte der Anwender dagegen beim Funktionstest einen Fehler feststellen, kann er einen Button "Funktionstest fehlgeschlagen" (englisch: Functional Commissioning Test Failed) drücken und das Feldgerät wechselt entsprechend einem Pfad 49 zum Zustand 40, das heißt in den Nichtsicherheitsbetrieb.

Nach erfolgter Parametrierung eines Feldgeräts erfordert das empfohlene Verfahren, gesteuert durch den Zustandsautomaten ZA (Figur 3), für einen Übergang vom Nichtsicherheitsbetrieb, entsprechend Zustand 40 in Figur 4, in den Sicherheitsbetrieb, Zustand 42, zwei Schritte:

| | |
|---|---|
| Erster Schritt: | Überprüfung der korrekten Parametrierung und deren Validierung mit Hilfe des Validation Keys P1, welcher die Geräte-ID einschließt, und |
| Zweiter Schritt: | Bestätigung einer erfolgreichen Funktionsprüfung mit erneuter Anzeige der Geräte-ID zur Gewährleistung der Eingabe zum richtigen Feldgerät. |

Für einen Übergang vom Sicherheitsbetrieb in den Nichtsicherheitsbetrieb erfordert der Zustandsautomat wiederum zwei Schritte, die allerdings der Übersichtlichkeit wegen in Figur 4 nicht dargestellt sind:

| | |
|---|---|
| Erster Schritt: | Der Anwender fordert den gewünschten Übergang an und bestätigt die Geräteidentifikation und |
| Zweiter Schritt: | Der Anwender bestätigt noch einmal die Anforderung des gewünschten Zustandsübergangs. |

Erst danach wechselt der Zustand des Feldgeräts in den Nichtsicherheitsbetrieb. Sollte die im zweiten Schritt erforderliche Eingabe der Bestätigung nicht innerhalb eines vorgegebenen Zeitraums erfolgen, kehrt das Feldgerät wieder in den Zustand Sicherheitsbetrieb zurück.

Der Übersichtlichkeit wegen sind in Figur 4 weitere Zustände, wie zum Beispiel ein Sicherheitsfehlerzustand, nicht dargestellt. Ein Verfahren zur Bestätigung von Sicherheitsfehlern, die im Sicherheitsbetrieb festgestellt werden, erfordert, dass ein Anwender zunächst die Geräte-ID prüft. Das identifizierte Feldgerät wechselt erst nach Bestätigung in den Nichtsicherheitsbetrieb. Das Feldgerät verbleibt also solange im Sicherheitsfehlerzustand, bis der Anwender das Kommando zum Quittieren sendet, welches die Geräte-ID als Token enthält. Es ist daher in einer vorteilhaften Weiterbildung des Verfahrens auch möglich, einen Fehlerzustand zu verlassen und nach erneuter Validierung wieder in den Sicherheitsbetrieb zu wechseln, wenn kein dauerhafter Fehler festgestellt wurde, ohne dass man für eine Vor-Ort-Bedienung zum Gerät muss.

## Patentansprüche

1. Verfahren zum Parametrieren eines Feldgeräts mit zumindest einem Parameter,
wobei der Parameter (SCUP) mittels einer Bedieneinheit (22) in das Feldgerät (Fx) eingegeben oder über eine erste logische Schnittstelle (S1) an das Feldgerät (Fx) übertragen und in einem Speicher (21) des Feldgeräts (Fx) hinterlegt wird, wobei durch das Feldgerät (Fx) zumindest auf der Basis des hinterlegten Parameters (SCUP) und einer Geräte-ID (SN) des Feldgeräts (Fx) ein erstes Prüfkennzeichen (P1) berechnet wird, das erste Prüfkennzeichen ebenfalls im Speicher (21) hinterlegt wird, über eine zweite logische Schnittstelle (S1) zu einem Engineering-System (4) übertragen wird und dort auf einer Anzeige (6) ausgegeben wird,
**dadurch gekennzeichnet,**
**dass** durch das Feldgerät (Fx) über eine dritte, zur ersten datendiversitäre logische Schnittstelle (S2) der Parameter (SCUP) zum Engineering-System (4) übertragen und dort auf der Anzeige (6) ausgegeben wird,
**dass** durch das Feldgerät (Fx) die Geräte-ID (SN) zum Engineering-System (4) übertragen und dort auf der Anzeige (6) ausgegeben wird,
**dass** ein durch einen Anwender nach visueller Prüfung des Parameters (SCUP) und der Geräte-ID (SN) am Engineering-System (4) in einem vorgegebenen Format eingegebenes erstes Prüfkennzeichen (P1') über eine vierte, zur zweiten datendiversitäre Schnittstelle (S2) an das Feldgerät (Fx) übertragen wird und
**dass** durch das Feldgerät (Fx) zur Validierung des Parameters (SCUP) das empfangene erste Prüfkennzeichen (P1') mit dem berechneten ersten Prüfkennzeichen (P1) verglichen wird.

2. Verfahren nach Anspruch 1, **dadurch gekennzeichnet, dass** im Fall einer Übereinstimmung des empfangenen ersten Prüfkennzeichens (P1') und des berechneten ersten Prüfkennzeichens (P1) der Zustand einer abgeschlossenen Validierung des zumindest einen Parameters (SCUP) im Speicher (21) des Feldgeräts (Fx) hinterlegt wird.

3. Verfahren nach Anspruch 2, **dadurch gekennzeichnet, dass** durch das Feldgerät (Fx) bei Abschluss der Validierung des zumindest einen Parameters auf der Basis der im Feldgerät (Fx) hinterlegten Parameter (SCUP, SCIP) ein zweites Prüfkennzeichen (P2) berechnet wird, dass das zweite Prüfkennzeichen zum Engineering-System (4) übertragen und dort auf der Anzeige (6) ausgegeben wird.

4. Verfahren nach Anspruch 2 oder 3, **dadurch gekennzeichnet, dass** im Fall einer abgeschlossenen Validierung des zumindest einen Parameters (SCUP) auf Veranlassung durch entsprechende Eingabe eines Anwenders auf einer Bedieneinheit (6) des Engineering-Systems (4) ein Funktionstest des Feldgeräts (Fx) durchgeführt wird und
dass das Feldgerät (Fx) im Falle eines fehlerfreien Abschlusses des Funktionstests nach dessen Bestätigung durch entsprechende Eingabe eines Anwenders auf der Bedieneinheit (6) in einen Sicherheitsbetrieb wechselt und dieser Zustand (42) im Speicher (21) des Feldgeräts (Fx) hinterlegt wird.

5. Verfahren nach Anspruch 4, **dadurch gekennzeichnet, dass** die Validierung des zumindest einen Parameters (SCUP) mittels eines im Feldgerät (Fx) implementierten Zustandsautomaten (ZA) überwacht wird.

6. Feldgerät zur Durchführung des Verfahrens nach einem der vorhergehenden Ansprüche,
wobei das Feldgerät (Fx) dazu ausgebildet ist, zumindest einen Parameter (SCUP) über eine erste logische Schnittstelle (S1) zu empfangen und in einem Speicher (21) zu hinterlegen, auf der Basis des hinterlegten Parameters (SCUP) und einer Geräte-ID (SN) des Feldgeräts (Fx) ein erstes Prüfkennzeichen (P1) zu berechnen, das erste Prüfkennzeichen (P1) ebenfalls im Speicher (21) zu hinterlegen, über eine zweite logische Schnittstelle (S1) zu einem Engineering-System (4) zu übertragen, derart, dass es dort auf einer Anzeige (6) ausgebbar ist,
**dadurch gekennzeichnet,**
**dass** das Feldgerät (Fx) weiterhin dazu ausgebildet ist, über eine dritte, zur ersten datendiversitäre logische Schnittstelle (S2) den zumindest einen Parameter (SCUP) zum Engineering-System (4) zu übertragen derart, dass der Parameter ebenfalls auf der Anzeige (6) ausgebbar ist,
**dass** das Feldgerät (Fx) weiterhin dazu ausgebildet ist, die Geräte-ID (SN) zum Engineering-System (4) zu übertragen, und dass das Feldgerät (Fx) weiterhin dazu ausgebildet ist, ein in einem vorgegebenen Format am Engineering-System (4) eingegebenes erstes Prüfkennzeichen (P1') über eine vierte, zur zweiten datendiversitäre Schnittstelle (S2) zu empfangen und zur Validierung des Parameters (SCUP) das empfangene erste Prüfkennzeichen (P1') mit dem berechneten ersten Prüfkennzeichen (P1) zu vergleichen.

## Claims

1. Method for parameterizing a field device with at least one parameter,
wherein the parameter (SCUP) is input into the field device (Fx) by means of an operating unit (22) or transferred to the field device (Fx) via a first logical interface (Sl) and deposited in a memory (21) of the field device (Fx), wherein the field device (Fx) calculates, at least on the basis of the deposited parameter (SCUP) and a device ID (SN) of the field device (Fx), a first checking characteristic (PI), the first checking characteristic is also deposited in the memory (21) and transferred via a second logical interface (Sl) to an engineering system (4) where it is output on a display (6),
**characterised in**
**that** the parameter (SCUP) is transferred by the field device (Fx) via a third logical interface (S2) that is data-diverse with respect to the first interface to the engineering system (4) where it is output on the display (6),
**that** the device ID (SN) is transferred by the field device (Fx) to the engineering system (4) and where it is output on the display (6),
**that** a first checking characteristic (P1') input by a user after visual checking of the parameter (SCUP) and the device ID (SN) on the engineering system (4) in a predefined format is transferred via a fourth interface (S2) that is data-diverse with respect to the second interface to the field device (Fx) and
**that** for validation of the parameter (SCUP), the received first checking characteristic (P1') is compared with the calculated first checking characteristic (P1) by the field device (Fx).

2. Method according to claim 1, **characterised in that** in the event of conformity between the received first checking characteristic (P1') and the calculated first checking characteristic (PI), the state of a completed validation of the at least one parameter (SCUP) is deposited in the memory (21) of the field device (Fx).

3. Method according to claim 2, **characterised in that** on the conclusion of the validation of the at least one parameter, the field device (Fx) calculates, on the basis of the parameters (SCUP, SCIP) deposited in the field device (Fx), a second checking characteristic (P2), that the second checking characteristic is transferred to the engineering system (4) where it is output on the display (6).

4. Method according to claim 2 or 3, **characterised in that** in the event of a completed validation of the at least one parameter (SCUP), a function test is performed on the field device (Fx) in response to a corresponding input by an user on an operating unit (6) of the engineering system (4) and that, in the event of a fault-free completion of the function test, following confirmation thereof, on a corresponding input by a user on the operating unit (6), the field device (Fx) changes to a safe mode and this state (42) is deposited in the memory (21) of the field device (Fx).

5. Method according to claim 4, **characterised in that** the validation of the at least one parameter (SCUP) is monitored by means of an automatic state machine (ZA) implemented in the field device (Fx).

6. Field device for performing the method according to one of the preceding claims,
wherein the field device (Fx) is embodied to receive at least one parameter (SCUP) via a first logical interface (Sl) and to deposit it in a memory (21), to calculate, on the basis of the deposited parameter (SCUP) and a device ID (SN) of the field device (Fx), a first checking characteristic (PI), also to deposit the first checking characteristic (P1) in the memory (21), to transfer it via a second logical interface (Sl) to an engineering system (4) such that it can be output on a display (6) there,
**characterised in that** the field device (Fx) is further embodied to transfer the at least one parameter (SCUP) via a third logical interface (S2) that is data-diverse with respect to the first logical interface to the engineering system (4) such that the parameter can also be output on the display (6), that the field device (Fx) is further embodied to transfer the device ID (SN) to the engineering system (4) and that the field device (Fx) is further embodied to receive a first checking characteristic (P1') on the engineering system (4) input in a predefined format via a fourth interface (S2) that is data-diverse to the second interface and, for validation of the parameter (SCUP), to compare the received first checking characteristic (P1') with the calculated first checking characteristic (P1).

## Revendications

1. Procédé de paramétrage d'un appareil sur site par au moins un paramètre,
dans lequel on entre le paramètre (SCUP) au moyen d'une unité (22) de commande dans l'appareil (Fx) sur site ou on le transmet à l'appareil (Fx) sur site par l'intermédiaire d'une première interface (S1) logique et on le met dans une mémoire (21) de l'appareil (Fx) sur site, dans lequel par l'appareil (Fx) sur site on calcule, au moins sur la base du paramètre (SCUP) mise en mémoire et d'une ID d'appareil (SN) de l'appareil (Fx) sur site, une première caractéristique (P1) de contrôle, on met la première caractéristique de contrôle également dans la mémoire (21), on la transmet à un système (4) d'ingénierie par l'intermédiaire d'une deuxième interface (S1) logique et on l'y sort sur un affichage (6),
**caractérisé,**
**en ce que**, par l'appareil (Fx) sur site, on transmet au système (4) d'ingénierie le paramètre (SCUP) par l'intermédiaire d'une troisième interface (S2) logique en diversité de données par rapport à la première et on l'y sort sur un affichage (6),
**en ce que**, par l'appareil (Fx) sur site, on transmet au système (4) d'ingénierie l'ID d'appareil (SN) et on l'y sort sur l'affichage (6),
**en ce que** l'on transmet à l'appareil (Fx) sur site, par l'intermédiaire d'une quatrième interface (S2) en diversité de données par rapport à la deuxième, une première caractéristique (P1') de contrôle, entrée dans un format donné à l'avance, au système (4) d'ingénierie par un utilisateur après contrôle visuel du paramètre (SCUP) et de l'ID d'appareil (SN) et
**en ce que**, par l'appareil (Fx) sur site on compare pour la validation du paramètre (SCUP) la première caractéristique (P1') de contrôle reçue à la première caractéristique (P1) de contrôle calculée.

2. Procédé suivant la revendication 1, **caractérisé en ce que**, si la première caractéristique (P1') de contrôle reçue coïncide avec la première caractéristique (P1) de contrôle calculée, on met l'état d'une validation terminé du au moins paramètre (SCUP) dans la mémoire (21) de l'appareil (Fx) sur site.

3. Procédé suivant la revendication 2, **caractérisé en ce que**, par l'appareil (Fx) sur site à la fin de la validation du au moins un paramètre sur la base des paramètres (SCUP, SCIP) mises en mémoire dans l'appareil (Fx) sur site, on calcule une deuxième caractéristique (P2) de contrôle, **en ce que** l'on transmet la deuxième caractéristique de contrôle au système (4) d'ingénierie et on l'y sort sur l'affichage (6).

4. Procédé suivant la revendication 2 ou 3, **caractérisé en ce que**, dans le cas d'une validation terminée du au moins paramètre (SCUP) sur instigation par entrée correspondante d'un utilisateur sur une unité (6) de commande du système (4) d'ingénierie, on effectue un test de fonctionnement de l'appareil (Fx) sur site et
**en ce que** l'on fait passer, dans le cas d'une fin sans défaut du test de fonctionnement après sa confirmation par une entrée correspondante d'un utilisateur sur l'unité (6) de commande, l'appareil (Fx) sur site dans un fonctionnement sécurisé et on met cet état (42) dans la mémoire (21) de l'appareil (Fx) sur site.

5. Procédé suivant la revendication 4, **caractérisé en ce que** l'on contrôle la validation du au moins un paramètre (SCUP) au moyen d'un automate (ZA) d'état mis en œuvre dans l'appareil (Fx) sur site.

6. Appareil sur site pour effectuer le procédé suivant l'une des revendications précédentes,
dans lequel l'appareil (Fx) sur site est constitué, pour recevoir au moins un paramètre (SCUP) par l'intermédiaire d'une première interface (S1) logique et pour le mettre dans une mémoire (21), pour calculer, sur la base du paramètre (SCUP) mis en mémoire et d'une ID d'appareil (SN) de l'appareil (Fx) sur site, une première caractéristique (P1) de contrôle, pour mettre la première caractéristique (P1) de contrôle également dans la mémoire (21), pour la transmettre, par l'intermédiaire d'une deuxième interface (S1) logique, à un système (4) d'ingénierie, de manière à pouvoir l'y émettre sur un affichage (6),
**caractérisé,**
**en ce que** l'appareil (Fx) sur site est constitué en outre pour, par l'intermédiaire d'une troisième interface (S2) logique en diversité de données par rapport à la première, transmettre le au moins paramètre (SCUP) au système (4) d'ingénierie de manière à pouvoir sortir le paramètre également sur l'affichage (6),
**en ce que** l'appareil (Fx) sur site est constitué en outre pour transmettre l'ID d'appareil (SN) au système (4) d'ingénierie et en ce que l'appareil (Fx) sur site est constitué en outre pour recevoir, par l'intermédiaire d'une quatrième interface (S2) en diversité de données par rapport à la deuxième, une première caractéristique (P1') de contrôle, entrée dans le système (4) d'ingénierie dans un format donné à l'avance, et pour comparer pour la validation du paramètre (SCUP) la première caractéristique (P1') de contrôle reçue à la première caractéristique (P1) de contrôle calculée.
